# EUROPEAN PATENT APPLICATION

(11) **EP 4 480 665 A1**
(43) Date of publication of application: **25.12.2024**
(21) Application number: 23760393.1
(22) Date of filing: 23.02.2023
(51) Int. Cl.: B29C 45/32, B29C 45/36, B29C 45/27, B29C 45/26, B29C 33/00, B29C 45/04

(54) **MOLD APPARATUS**

(30) Priority: 23.02.2022 KR 20220023889
(71) Applicant: LG Electronics Inc., Yeongdeungpo-gu Seoul 07336 (KR)
(72) Inventor: CHOI, Wonseok, Seoul 06772 (KR); JUNG, Mingoan, Seoul 06772 (KR); CHOI, Soonho, Seoul 06772 (KR)
(74) Representative: Schornack, Oliver
(86) International application number: PCT/KR2023/002583
(87) International publication number: WO 2023/163519

(57) **Abstract**

**Abstract:** A mold apparatus comprises: a fixed mold comprising a first parting surface; a first movable mold comprising a second parting surface facing the first parting surface; and a first core part comprising a fixed core which is coupled to the first parting surface of the fixed mold, and a first movable core which is coupled to the second parting surface of the first movable mold and forms a cavity when making contact with the fixed core, wherein the first core part comprises a rim-shaped first core which comprises a first cavity, and a second core which is positioned on the inner side or outer side of the first core and forms the same plane, and comprises a second cavity different in size from the first cavity. The mold apparatus enables the integration of a plurality of rim-shaped cores each corresponding to the shape of a case forming the exterior of a display device, and thus a plurality of cavities may be formed on a parting surface without having to increase the thickness or size of a mold.

## Description

### [Technical Field]

The present disclosure relates to a mold apparatus that may simultaneously or selectively manufacture injection-molded products of various sizes by integrating removable rim-shaped cores to define multiple cavities in a parting surface.

### [Background]

An injection mold is equipped with a set of cores constructed to define a cavity corresponding to a shape of a product in a parting surface. With the set of cores in contact with each other, molten resin is injected into the cavity and then cooled so as to be hardened. Then, the set of cores is opened to extract an injection-molded product molded in the cavity.

The injection mold is generally used to produce large quantities of injection-molded products of the same shape by defining one cavity in one parting surface. However, because only one cavity exists whether a large injection-molded product is manufactured or a small injection-molded product is manufactured, only one injection-molded product is manufactured. Therefore, all injection operations for desired products may be performed only by having multiple molds that may define cavities corresponding to sizes of respective injection-molded products.

When the number of molds that may define the cavities corresponding to the sizes of the respective injection-molded products is insufficient, after manufacturing an injection-molded product of a specific size, an injection-molded product of a different size may be manufactured by replacing the core in the mold. However, when the injection-molded product is manufactured simply by replacing the core, the mold may be damaged when the mold is not able to withstand high temperatures because of insufficient cooling of the mold, and a quality of the injection-molded product may also be affected.

Recently, a so-called multi-cavity injection mold, which may manufacture multiple injection-molded products with a single injection by defining multiple cavities in one parting surface, is being used. In the typical multi-cavity injection mold, the multiple cavities are connected to the one parting surface to manufacture one injection-molded product. Thereafter, connection portions between the cavities are cut to divide the injection-molded product into multiple products.

However, in this case, when there is a problem in controlling a temperature of the molten resin or the mold and the injection-molded product is defective, the entire products must be discarded. In addition, even when the injection is performed properly, not only does it take a long time to manufacture the products because the injection-molded product must be cut into the individual products, but also there are limitations such as additional costs resulted from need of additional equipment and manpower, and a damage that may occur during work, which may lead to a decline in the quality of the injection-molded product.

Furthermore, even when the multiple cavities are defined separately in the one parting surface, an injection time of the molten resin into each cavity may vary depending on a location, a shape, or a size of the cavity, which may cause an imbalance in the injection molding between the multiple cavities. In this case, as described above, the quality of the injection-molded product is declined. Additionally, a size of the mold inevitably increases depending on the size and a quantity of the injection-molded products.

The above-mentioned problems may also occur when a casing that forms an outer appearance of a display device is manufactured as an injection-molded product. This is because the display device may be manufactured in various inches, and correspondingly, there is a great need to efficiently manufacture the casings of the various sizes without deteriorating quality.

### [Summary]

### [Technical Problem]

The present disclosure is to provide a mold apparatus, and more specifically, to a mold apparatus that may define multiple cavities in a parting surface without increasing a thickness or a size of a mold by integrating multiple rim-shaped cores corresponding to shapes of casings that form outer appearances of display devices.

Additionally, the present disclosure is to provide a mold apparatus that may selectively manufacture casings of various sizes by attaching and detaching cores.

In addition, the present disclosure is to provide a mold apparatus that may improve quality and reliability of a manufactured casing, via a hot runner structure, and an injection line and a cooling line formed inside each core.

The problems to be solved in the present disclosure are not limited to the problems mentioned above, and other problems not mentioned are able to be clearly understood by a person with ordinary knowledge in the technical field to which the present disclosure belongs from the description below.

### [Technical Solutions]

Provided is a mold apparatus including a fixed mold including a first parting surface, a first movable mold including a second parting surface facing the first parting surface, and a first core assembly composed of a fixed core coupled to the first parting surface of the fixed mold, and a first movable core coupled to the second parting surface of the first movable mold and defining a cavity when being in contact with the fixed core, wherein the first core assembly includes a rim-shaped first core including a first cavity, and a second core located inwardly or outwardly of the first core, forming the same plane as the first core, and including a second cavity having a size different from a size of the first cavity.

The first core and the second core may be detachably coupled to each other in the fixed mold and the first movable mold.

The first core may include a first injection line extending therethrough at one side thereof and connected to the first cavity, and the second core may include a second injection line extending therethrough at one side thereof and connected to the second cavity.

The fixed mold may include a sprue bush on a surface opposite to the first parting surface, wherein molten resin is injected into the sprue bush, and the sprue bush may be connected to a hot runner, wherein the hot runner injects the molten resin into the first cavity and the second cavity via the first injection line and the second injection line, respectively.

The hot runner may include a first hot runner connected to the sprue bush, extending through the fixed mold and the first movable mold, and formed in a first direction, a second hot runner branched from the first hot runner in a second direction perpendicular to the first direction, and a third hot runner branched from the second hot runner in the first direction and connected to the first injection line and the second injection line.

The first core may include a first cooling line formed in a longitudinal direction to be spaced apart from the first cavity located inward, and the second core may include a second cooling line formed in the longitudinal direction to be spaced apart from the second cavity located inward.

The first movable mold may include a third parting surface at a side opposite to the second parting surface, and the mold apparatus may further include a second movable mold including a fourth parting surface facing the third parting surface, and a second core assembly composed of a second movable core coupled to the third parting surface of the first movable mold, and a third movable core coupled to the fourth parting surface of the second movable mold and defining a cavity when being in contact with the second movable core.

The mold apparatus may further include a driver that allows the first movable mold to move in a front and rear direction in association with operation in the front and rear direction of the second movable mold, and the driver may include a first rack located on a side surface of the fixed mold and a side surface of the first movable mold, a second rack located on the side surface of the first movable mold and a side surface of the second movable mold, and a pinion engaged with the first rack and the second rack.

The driver may include a guide block allowing the first rack and the second rack to be engaged with the pinion while maintaining an equal separation distance therebetween.

The second core assembly may include a rim-shaped third core including a third cavity, and a fourth core located inwardly or outwardly of the third core, forming the same plane as the third core, and including a fourth cavity having a size different from a size of the third cavity.

The third cavity and the fourth cavity may be different in size from the first cavity and the second cavity.

The third core and the fourth core may be detachably coupled to each other in the first movable mold and the second movable mold.

### [Advantageous Effects]

The mold apparatus according to the present disclosure may define the multiple cavities in the parting surface without increasing the thickness or the size of the mold by integrating the multiple rim-shaped cores corresponding to the shapes of the casings that form the outer appearances of the display devices.

Additionally, the casings of the various sizes may be selectively manufactured by attaching and detaching the cores.

In addition, the present disclosure is to provide the mold apparatus that may improve the quality and the reliability of the manufactured casing, via the hot runner structure, and the injection line and the cooling line formed inside each core.

The effects that may be obtained from the present disclosure are not limited to the effects mentioned above, and other effects not mentioned are able to be clearly understood by a person with ordinary knowledge in the technical field to which the present disclosure belongs from the description below.

### [Brief Description of the Drawings]

FIG. 1 is a diagram showing a shape of a front surface of a casing that forms an outer appearance of a display device.
FIG. 2 is a front view of a mold apparatus in a mold-separated state according to an embodiment of the present disclosure.
FIG. 3 is a front view of a mold apparatus in a mold-combined state according to an embodiment of the present disclosure.
FIGS. 4 and 5 are perspective views of a fixed mold, a first movable mold, and a second movable mold in a mold apparatus according to an embodiment of the present disclosure.
FIG. 6 is a diagram for illustrating structures of a first core and a second core of a mold apparatus according to an embodiment of the present disclosure compared to a general core structure of an injection mold.
FIG. 7 is a diagram illustrating internal structures of a first core and a second core in a mold apparatus according to an embodiment of the present disclosure.
FIG. 8 is a diagram illustrating a hot runner formed on a mold apparatus according to an embodiment of the present disclosure.
FIG. 9 is an enlarged view of an area A in (a) in FIG. 4.

### [Best Mode]

Description will now be given in detail according to exemplary embodiments disclosed herein, with reference to the accompanying drawings. The same or equivalent components may be provided with the same reference numbers, and description thereof will not be repeated. As used herein, the suffixes "module" and "part" are added or used interchangeably to facilitate preparation of this specification and are not intended to suggest distinct meanings or functions. In describing embodiments disclosed in this specification, relevant well-known technologies may not be described in detail in order not to obscure the subject matter of the embodiments disclosed in this specification. In addition, it should be noted that the accompanying drawings are only for easy understanding of the embodiments disclosed in the present specification, and should not be construed as limiting the technical spirit disclosed in the present specification. As such, the present disclosure should be construed to extend to any alterations, equivalents and substitutes in addition to those which are particularly set out in the accompanying drawings.

Although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, it will be understood that when an element is referred to as being "directly connected with" another element, there are no intervening elements present.

A singular representation may include a plural representation unless it represents a definitely different meaning from the context.

The terms such as "include" or "have" used herein are intended to indicate that features, numbers, steps, operations, elements, components, or combinations thereof used in the following description exist and it should be thus understood that the possibility of existence or addition of one or more different features, numbers, steps, operations, elements, components, or combinations thereof is not excluded.

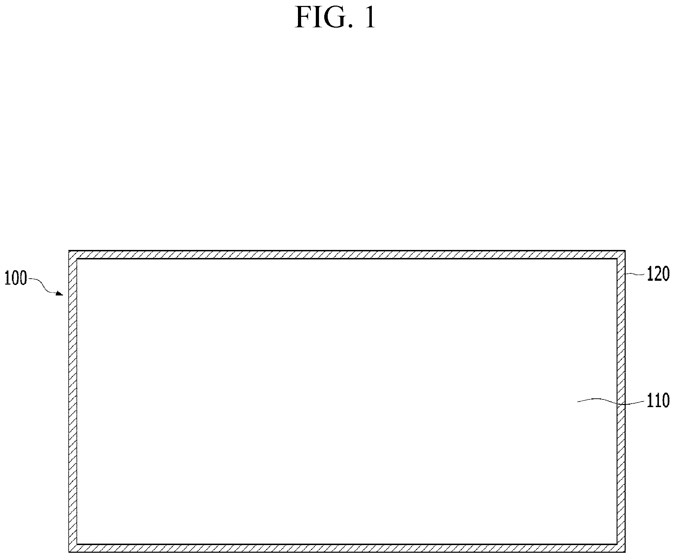

FIG. 1 is a diagram showing a shape of a front surface of a casing 120 that forms an outer appearance of a display device 100.

The display device 100 may include a display 110 that occupies most area of a front surface, and the casing 120 that covers a perimeter of the front surface of the display 110 and even surrounds a perimeter of a side surface thereof. The casing 120 forms the outer appearance of the display device 100, and a shape of the casing 120 is a square frame shape with an empty center as shown in FIG. 1.

Further, the casing 120 may include a plastic material, and in this case, may be manufactured mainly by injection using an injection mold. As mentioned above, the injection mold is equipped with a set of cores constructed to define a cavity corresponding to a shape of a product in a parting surface. With the set of cores in contact with each other, molten resin is injected into the cavity and then cooled so as to be hardened. Then, the set of cores is opened to extract the injection-molded product in the cavity.

In this regard, because the display device 100 may be manufactured in various inches, the casing 120 should also be manufactured in a corresponding size. When using the above-described general injection mold, having multiple molds corresponding to injection-molded products of various sizes causes a cost issue, and reducing the number of molds by replacing the core also causes damage to the mold or affects a quality of the injection-molded product.

In addition, when defining multiple cavities in one parting surface to manufacture the injection-molded products of different sizes, the size of the mold inevitably increases as described above, and imbalance in the injection molding between the multiple cavities may occur, which also affects the quality of the injection-molded product.

Accordingly, the present disclosure is to provide a mold apparatus that defines the multiple cavities by utilizing an idle space in the center of the casing 120 in the shape of the square frame with the empty center to solve the above-mentioned problems.

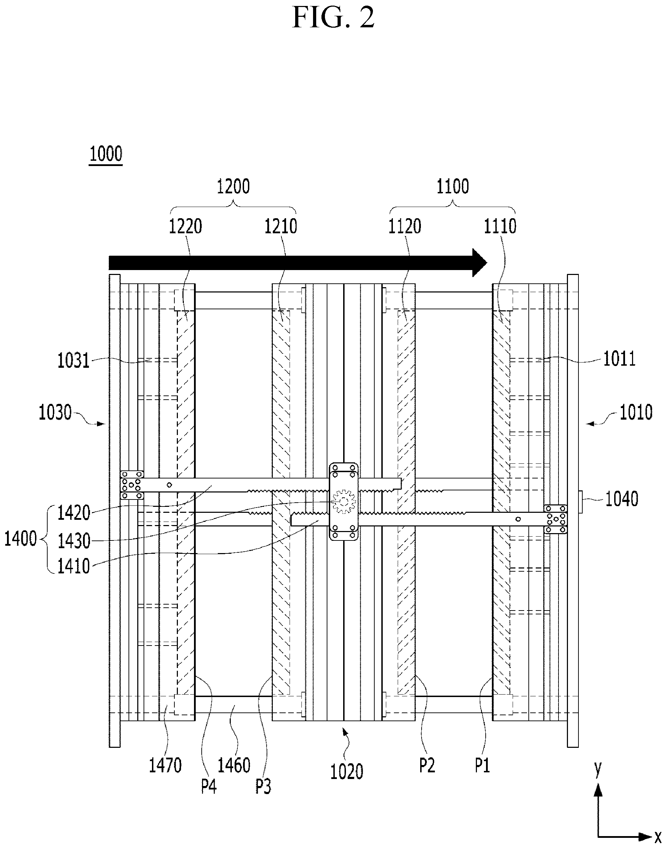

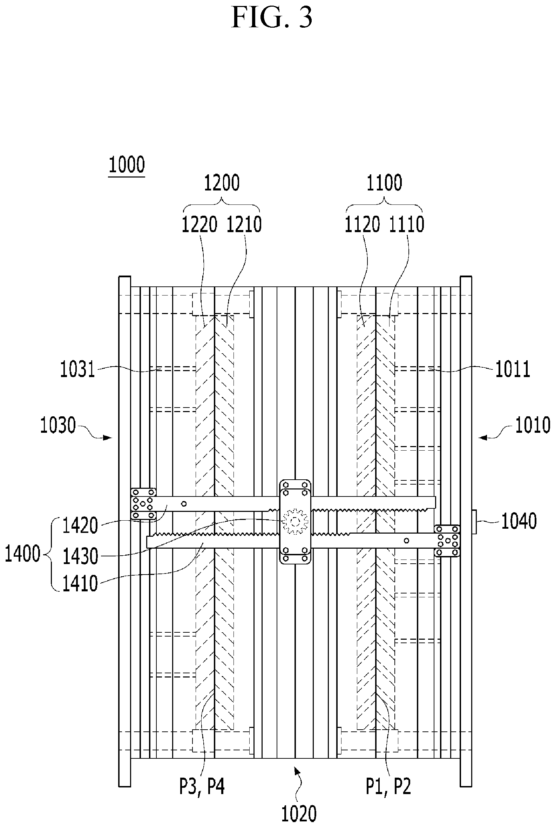

FIG. 2 is a front view of a mold apparatus 1000 in a mold-separated state according to an embodiment of the present disclosure. Further, FIG. 3 is a front view of the mold apparatus 1000 in a mold-combined state according to an embodiment of the present disclosure.

As shown in FIGS. 2 and 3, the mold apparatus 1000 according to an embodiment of the present disclosure may include a fixed mold 1010, a first movable mold 1020, and a first core assembly 1100. In this regard, the fixed mold 1010 may include a first parting surface P1, and the first movable mold 1020 may include a second parting surface P2 facing the first parting surface P1.

The first core assembly 1100 may include a fixed core 1110 that is coupled to the first parting surface P1 of the fixed mold 1010 and a first movable core 1120 that is coupled to the second parting surface P2 of the first movable mold 1020 and defines a cavity when being in contact with the fixed core 1110.

In this regard, the first core assembly 1100 may define multiple cavities corresponding to the shapes of the casings 120 of the various sizes described above via FIG. 1, via rim-shaped cores. This will be described later.

Additionally, in the mold apparatus 1000 according to an embodiment of the present disclosure, the first movable mold 1020 may include a third parting surface P3 on the other side of the second parting surface P2. Further, a second movable mold 1030 including a fourth parting surface P4 facing the third parting surface P3 may be included.

In addition, a second core assembly 1200 composed of a second movable core 1210 coupled to the third parting surface P3 of the first movable mold 1020, and a third movable core 1220 that is coupled to the fourth parting surface P4 of the second movable mold 1030 and defines a cavity when being in contact with the second movable core 1210 may be further included.

Referring to FIG. 1 together, the mold apparatus 1000 according to an embodiment of the present disclosure may manufacture the casings 120 of the various sizes via the multiple cavities defined as the first parting surface P1 and the second parting surface P2 come into contact with each other when the fixed mold 1010 and the first movable mold 1020 are combined together. Further, the casings 120 of the various sizes may be manufactured via the multiple cavities defined as the first parting surface P1 and the second parting surface P2 come into contact with each other and the third parting surface P3 and the fourth parting surface P4 come into contact with each other when the fixed mold 1010, the first movable mold 1020, and the second movable mold 1030 are combined together.

Further, the mold apparatus 1000 according to an embodiment of the present disclosure may further include a driver 1400 that allows the first movable mold 1020 to move in a front and rear direction (an x-axis direction) in association with front and rear direction (the x-axis direction) operation of the second movable mold 1030. In this regard, the driver 1400 may include a first rack 1410 located on side surfaces of the fixed mold 1010 and the first movable mold 1020, a second rack 1420 located on side surfaces of the first movable mold 1020 and the second movable mold 1030, and a pinion 1430 engaged with the first rack 1410 and the second rack 1420.

Via the driver 1400, the mold apparatus 1000 of the present disclosure may equalize moving speeds in the front and rear direction (the x-axis direction) of the first movable mold 1020 and the second movable mold 1030 during mold combining and mold separation, thereby transmitting an equal force such that separation distances between the fixed mold 1010, the first movable mold 1020, and the second movable mold 1030 remain equal to each other.

Accordingly, a lifespan of the mold apparatus 1000 of the present disclosure may be improved by minimizing an impact that may be applied during the mold combining and the mold separation. In addition, the driver 1400 ensures that the fixed mold 1010, the first movable mold 1020, and the second movable mold 1030 are completely combined together as shown in FIG. 3, thereby preventing the imbalance in the injection molding between the multiple cavities during the injection molding process.

In addition, the mold apparatus 1000 according to an embodiment of the present disclosure may include guide bars 1460 respectively coupled to upper and lower portions of the first movable mold 1020, and the fixed mold 1010 and the second movable mold 1030 may respectively include guide grooves 1470 through which the guide bars 1460 extend. Accordingly, movement areas of the first movable mold 1020 and the second movable mold 1030 may be guided during the mold combining and the mold separation of the mold apparatus 1000 viah the driver 1400 described above.

Additionally, the mold apparatus 1000 according to an embodiment of the present disclosure may include a sprue bush 1040 into which molten resin is injected on a surface opposite to the first parting surface P1 of the fixed mold 1010. In this regard, the sprue bush 1040 may be connected to an injection machine (not shown) that melts the resin.

Additionally, the mold apparatus 1000 according to an embodiment of the present disclosure may extract the injection-molded product after the injection molding process is completed, that is, the casing 120 shown in FIG. 1, therefrom. To this end, the fixed mold 1010 may include a plurality of first eject pins 1011, and the second movable mold 1030 may include a plurality of second eject pins 1031.

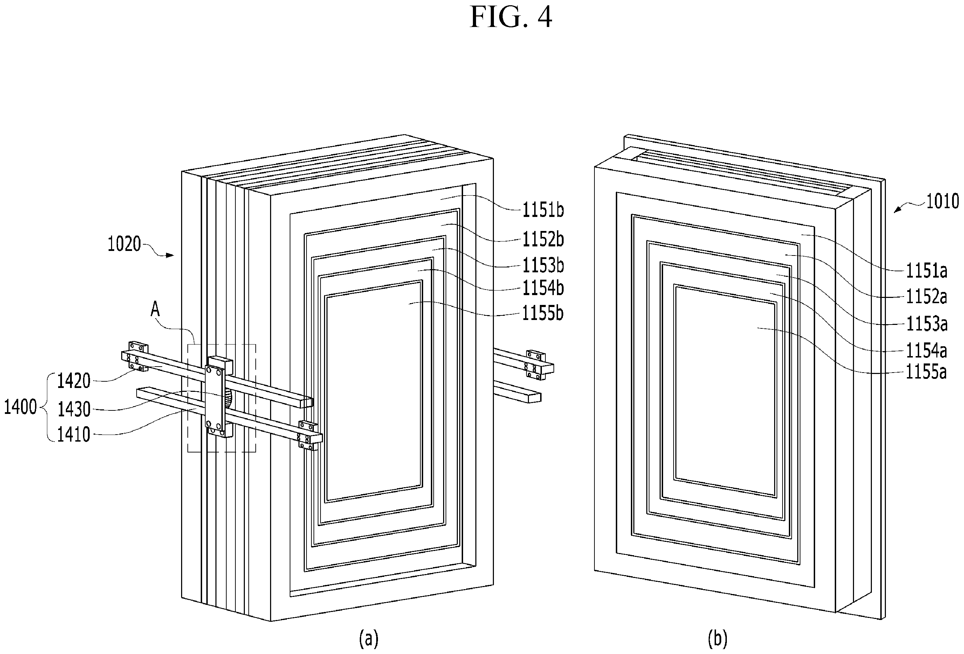

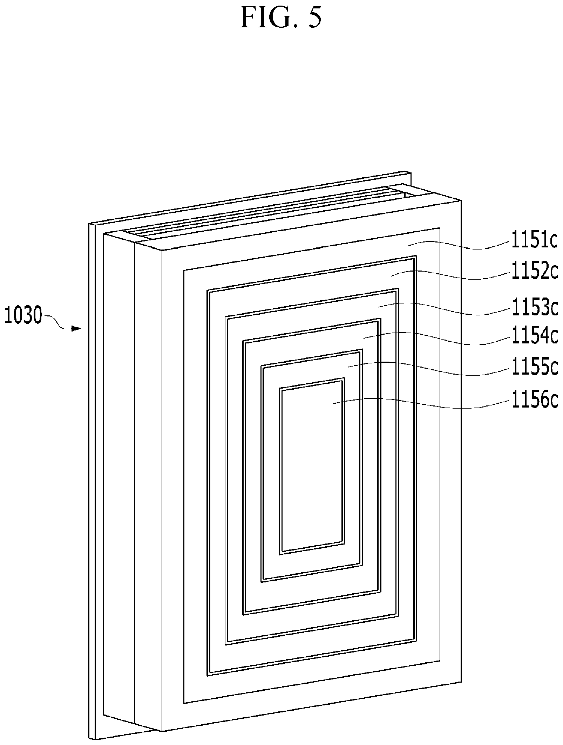

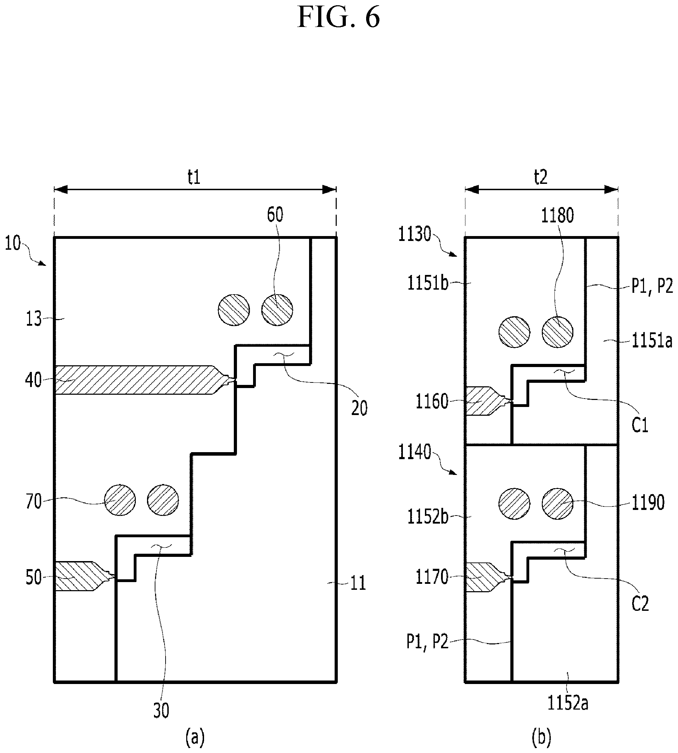

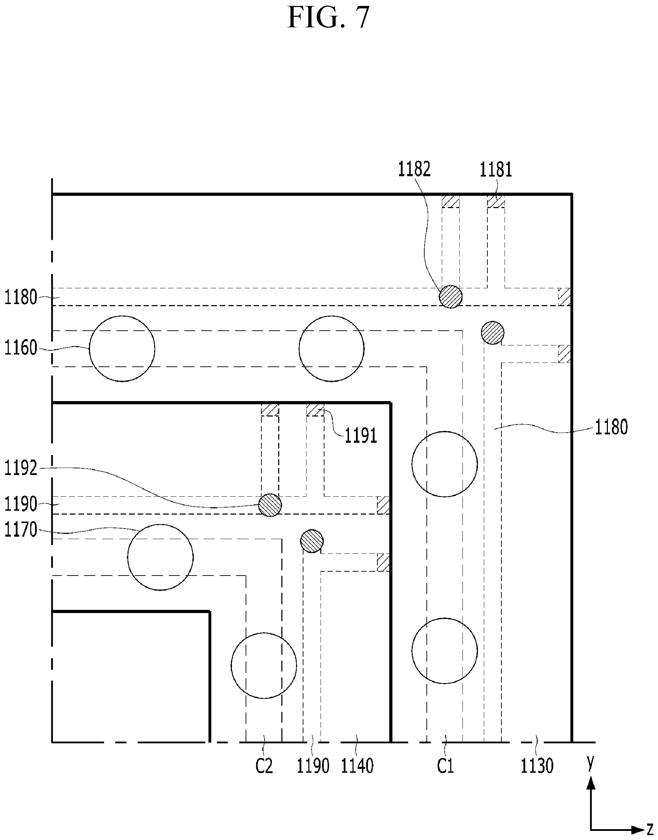

FIGS. 4 and 5 are perspective views of the fixed mold 1010, the first movable mold 1020, and the second movable mold 1030 in the mold apparatus 1000 according to an embodiment of the present disclosure. FIG. 6 is a diagram for illustrating structures of a first core 1130 and a second core 1140 of the mold apparatus 1000 according to an embodiment of the present disclosure compared to a general core structure 10 of the injection mold. Further, FIG. 7 is a diagram illustrating internal structures of the first core 1130 and the second core 1140 in the mold apparatus 1000 according to an embodiment of the present disclosure.

First, in FIGS. 4 and 5, (a) in FIG. 4 is a perspective view of the first movable mold 1020, (b) in FIG. 4 is a perspective view of the fixed mold 1010, and FIG. 5 is a perspective view of the second movable mold 1030.

As described above with reference to FIG. 1, the mold apparatus 1000 according to an embodiment of the present disclosure is to provide the mold apparatus 1000 that may define the multiple cavities without increasing a thickness or a size of the mold apparatus 1000 by utilizing the idle space in the center of the casing 120 in the shape of the square frame with the empty center.

Accordingly, referring to FIGS. 6 and 7 together, the mold apparatus 1000 according to an embodiment of the present disclosure may include the rim-shaped first core 1130 including a first cavity C1, and the second core 1140 that is located inwardly or outwardly of the first core 1130, forms the same plane with the first core 1130, and includes a second cavity C2 of a different size from that of the first cavity C1. Hereinafter, for convenience of description, the largest core will be referred to as the first core 1130, and the second core 1140 will be described as being located inwardly of the first core 1130.

As an embodiment of the present disclosure, as shown in (b) in FIG. 4, the fixed mold 1010 may include a rim-shaped fixed-side first core 1151a. Further, a rim-shaped fixed-side second core 1152a that is smaller in size than the fixed-side first core 1151a may be located inwardly of the fixed-side first core 1151a. In this way, a fixed-side third core 1153a, a fixed-side fourth core 1154a, and a fixed-side fifth core 1155a may be positioned.

Further, as shown in (a) in FIG. 4, the first movable mold 1020 may include multiple first movable-side cores 1151b, 1152b, 1153b, 1154b, and 1155b such that multiple cavities may be defined when being in contact with the multiple fixed-side cores 1151a, 1152a, 1153a, 1154a, and 1155a of the fixed mold 1010 described above.

That is, the first movable mold 1020 may include the rim-shaped first movable-side first core 1151b in contact with the fixed-side first core 1151a. Further, the rim-shaped first movable-side second core 1152b in contact with the fixed-side second core 1152a may be located inwardly of the first movable-side first core 1151b. In this way, the first movable-side third core 1153b, the first movable-side fourth core 1154b, and the first movable-side fifth core 1155b may be located.

In the case of an embodiment of the present disclosure described above, as shown in FIG. 3, the fixed mold 1010 and the first movable mold 1020 may be combined together to define the four cavities of the different sizes. In other words, four casings 120 described above with reference to FIG. 1 may be manufactured via a single injection process.

In addition, as described above with reference to FIGS. 2 and 3, the mold apparatus 1000 according to an embodiment of the present disclosure may include the first movable mold 1020 including the third parting surface P3, the second movable mold 1030 including the fourth parting surface P4 facing the third parting surface P3, and the second core assembly 1200 composed of the second movable core 1210, which is coupled to the third parting surface P3 of the first movable mold 1020, and the third movable core 1220, which is coupled to the fourth parting surface P4 of the second movable mold 1030 and defines the cavity when being in contact with the second movable core 1210.

Further, the second core assembly 1200 may include a rim-shaped third core that includes a third cavity, and a fourth core that is located inwardly or outwardly of the third core, forms the same plane as the third core, and includes a fourth cavity of a different size from that of the third cavity.

In this regard, referring to FIGS. 6 and 7 together, FIGS. 6 and 7 show the first core 1130, the second core 1140, the first cavity C1, and the second cavity C2. However, FIGS. 6 and 7 may include illustrations of structures and shapes of the third core, the fourth core, the third cavity, and the fourth cavity.

In particular, in the mold apparatus 1000 according to an embodiment of the present disclosure, to manufacture the casing 120 described above with FIG. 1 in the various sizes, the third cavity and the fourth cavity may have sizes different from those of the first cavity C1 and the second cavity C2.

Accordingly, as an embodiment of the present disclosure, as shown in FIG. 5, the second movable mold 1030 may include a rim-shaped second movable-side first core 1151c. Further, a rim-shaped second movable-side second core 1152c that is smaller in size than the second movable-side first core 1151c may be located inwardly of the second movable-side first core 1151c. In this way, a second movable-side third core 1153c, a second movable-side fourth core 1154c, a second movable-side fifth core 1155c, and a second movable-side sixth core 1156c may be positioned.

Further, referring to (a) in FIG. 4, the first movable mold 1020 may have multiple cores that allow multiple cavities to be defined when being in contact with the multiple second movable-side cores 1151c, 1152c, 1153c, 1154c, 1155c, and 1156c described above.

Therefore, in this case, as shown in FIG. 3, as the first movable mold 1020 and the second movable mold 1030 are combined together, five cavities of different sizes may be defined. In other words, five additional casings 120 described above with reference to FIG. 1 may be produced via the single injection process.

Additionally, referring to FIGS. 2 and 3 together, the first core 1130 and the second core 1140 may be detachably coupled to each other in the fixed mold 1010 and the first movable mold 1020. Further, the third core and the fourth core may be detachably coupled to each other in the first movable mold 1020 and the second movable mold 1030.

That is, the multiple movable-side cores 1151a, 1152a, 1153a, 1154a, and 1155a, the multiple first mold-side cores 1151b, 1152b, 1152c, 1153c, 1154c, and 1155c, and the multiple second mold-side cores 1151c, 1152c, 1153c, 1154c, 1155c, and 1156c shown in FIGS. 4 and 5 described above may be detachably coupled to each other in the fixed mold 1010, the first movable mold 1020, and the second movable mold 1030.

Accordingly, the mold apparatus 1000 according to an embodiment of the present disclosure may not only simultaneously manufacture the casing 120 shown in FIG. 1 in the various sizes, but also selectively manufacture the casing 120 of a desired size as needed.

For example, when the fixed mold 1010 and the first movable mold 1020 are combined together, the four cavities of the different sizes may be defined, and accordingly, the casings 120 in sizes of 50 inches, 60 inches, 70 inches, and 82 inches may be manufactured simultaneously. In addition, when the first movable mold 1020 and the second movable mold 1030 are combined together, the five cavities of the different sizes may be defined, and accordingly, the casings 120 in sizes of 43 inches, 55 inches, 65 inches, 75 inches, and 86 inches may be manufactured simultaneously.

Additionally, as described above, the casing 120 of the desired size may be selected to be manufactured via attaching and detaching of the multiple cores. For example, when the fixed mold 1010 and the first movable mold 1020 are combined together, the cavities may be defined by attaching and detaching the cores such that the 50-inch and 82-inch casings 120 may be manufactured. Likewise, when the first movable mold 1020 and the second movable mold 1030 are combined together, the cavities may be defined by attaching and detaching the cores such that 55-inch, 75-inch, and 86-inch casings 120 may be manufactured.

Summarizing what has been described above with reference to FIGS. 1 to 5, the mold apparatus 1000 according to an embodiment of the present disclosure may utilize the idle space in the center of the casing 120 that forms the outer appearance of the display device 100 to define the multiple rim-shaped cavities.

In addition, because the casing 120 of the desired size may be selectively manufactured via the attaching and the detaching of the multiple cores, efficient injection may be available based on a production quantity, thereby reducing unnecessary costs and waste of resources.

FIG. 6 is a diagram for illustrating structures of the first core 1130 and the second core 1140 of the mold apparatus 1000 according to an embodiment of the present disclosure compared to the general core structure 10 of the injection mold.

(a) in FIG. 6 is a diagram showing the general core structure 10 of the injection mold for manufacturing the casing 120 in FIG. 1 in the different sizes. In this case, a first molding groove 20 and a second molding groove 30 of different sizes may be defined only when a lower core 11 and an upper core 13 are formed in a stepped structure and are in contact with each other. In addition, a first cooler 60 and a second cooler 70 for cooling the core structure 10 should be installed spaced apart from the first forming groove 20 and the second forming groove 30, respectively. Ultimately, a thickness t1 of the injection mold via the general core structure 10 inevitably increases.

In addition, because of the stepped structure as shown in (a) in FIG. 6, a first injector 40 that injects the molten resin is inevitably formed to be longer than a second injector 50. This may cause injection times of the molten resin into the first molding groove 20 and the second molding groove 30 to be different from each other, resulting in an imbalance in the injection molding.

On the other hand, (b) in FIG. 6 is a diagram showing the structures of the first core 1130 and the second core 1140 of the mold apparatus 1000 according to an embodiment of the present disclosure. Compared to (a) in FIG. 6, it may be seen that the first cavity C1 and the second cavity C2 of the different sizes may be defined without an increase in a thickness t2 of the mold apparatus 1000.

More specifically, the first core 1130 including the first cavity C1 defined in the first parting surface P1 and the second parting surface P2 may include the fixed-side first core 1151a and the first movable-side first core 1151b. In addition, the second core 1140 including the second cavity C2 defined in the first parting surface P1 and the second parting surface P2 and having a size different from that of the first cavity C1 may include the fixed-side second core 1152a and the first movable-side second core 1152b.

Further, because the second core 1140 is located inwardly or outwardly of the rim-shaped first core 1130, as described above, the first cavity C1 and the second cavity C2 of the different sizes may be defined while not increasing the thickness t2 of the mold apparatus 1000 of the present disclosure. Additionally, a first cooling line 1180 and a second cooling line 1190 may be formed in the first core 1130 and the second core 1140, respectively, while maintaining the thickness t2 of the mold apparatus 1000.

In addition, compared to (a) in FIG. 6, a length of a first injection line 1160 that injects the molten resin into the first cavity C1 and a length of the second injection line 1170 that injects the molten resin into the second cavity C2 may be equal to each other, so that the imbalance in the injection molding may be prevented.

Therefore, the mold apparatus 1000 according to an embodiment of the present disclosure may define the multiple cavities without increasing the thickness or the size of the mold apparatus 1000 via the rim-shaped first core 1130 that includes the first cavity C1 and the second cavity C2 that is located inwardly or outwardly of the first core 1130, forms the same plane as the first core 1130, and includes the second cavity C2 of the different size from that of the first cavity C1.

FIG. 7 is the diagram illustrating the internal structures of the first core 1130 and the second core 1140 in the mold apparatus 1000 according to an embodiment of the present disclosure.

As described above with reference to FIG. 4, in the mold apparatus 1000 of the present disclosure, the first core 1130 and the second core 1140 may be detachably coupled to each other in the fixed mold 1010 and the first movable mold 1020. Therefore, a line for injecting the molten resin and a line for injecting fluid for cooling should be individually formed in each of the first core 1130 and the second core 1140.

Accordingly, referring to FIGS. 6 and 7 together, the first core 1130 may include the first injection line 1160 that extends therethrough at one side and is connected to the first cavity C1, and the second core 1140 may include the second injection line 1170 that extends therethrough at one side and is connected to the second cavity C2.

In this regard, the first injection line 1160 may include a plurality of first injection lines that are spaced apart from each other along the first cavity C1. Additionally, the second injection line 1170 may include a plurality of second injection lines spaced apart from each other along the second cavity C2.

In addition, the first core 1130 may include a first cooling line 1180 formed in a longitudinal direction (a y-axis direction and a z-axis direction) to be spaced apart from the first cavity C1 located inward, and the second core 1140 may include a second cooling line 1190 formed in the longitudinal direction (the y-axis direction and the z-axis direction) to be spaced apart from the second cavity C2 located inward.

In this regard, the first cooling line 1180 may be connected to a first fluid inlet 1181 defined in a side surface of the first core 1130. The first fluid inlet 1181 may include a plurality of first fluid inlets spaced apart from each other in the side surface of the first core 1130. In this case, the first cooling line 1180 may include a plurality of first cooling lines corresponding to the number of first fluid inlets 1181. Further, the plurality of first cooling lines 1180 may be connected to each other.

Additionally, the first cooling line 1180 may be connected to a second fluid inlet 1182 defined at one side of the first core 1130. In addition, the second fluid inlet 1182 may include a plurality of second fluid inlets spaced apart from each other at one side of the first core 1130. The plurality of second fluid inlets may be connected to the plurality of first cooling lines 1180.

The second cooling line 1190 may be connected to a third fluid inlet 1191 defined in a side surface of the second core 1140. The third fluid inlet 1191 may include a plurality of third fluid inlets spaced apart from each other in the side surface of the second core 1140. In this case, the second cooling line 1190 may include a plurality of second cooling lines corresponding to the number of third fluid inlets 1191. Further, the plurality of second cooling lines 1190 may be connected to each other.

Additionally, the second cooling line 1190 may be connected to a fourth fluid inlet 1192 defined at one side of the second core 1140. In addition, the fourth fluid inlet 1192 may include a plurality of fourth fluid inlets spaced apart from each other at one side of the second core 1140, and the plurality of fourth fluid inlets may be connected to the plurality of second cooling lines 1190.

As described above, the mold apparatus 1000 according to an embodiment of the present disclosure may inject the molten resin into the cavity and may also inject the fluid for the cooling even when the first core 1130 or the second core 1140 is separated, via the first injection line 1160, the second injection line 1170, the first cooling line 1180, and the second cooling line 1190 individually formed in the first core 1130 and the second core 1140.

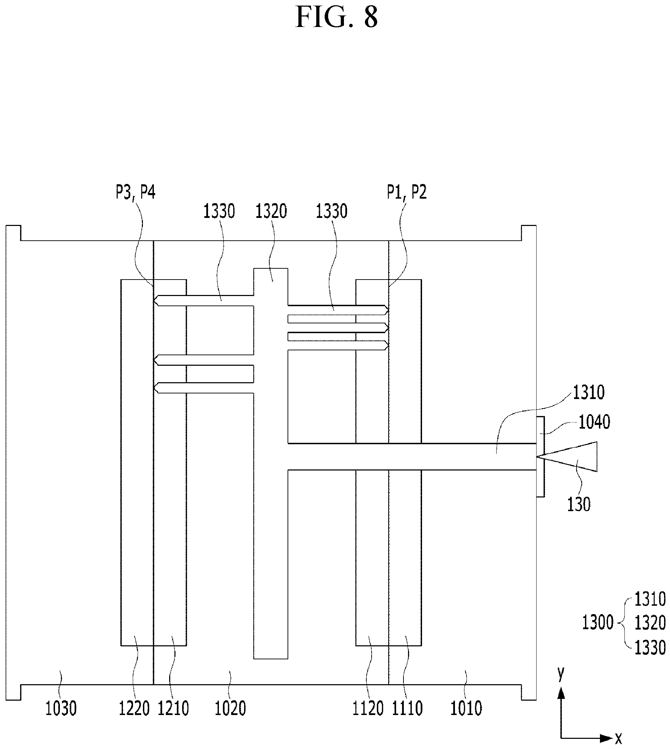

FIG. 8 is a diagram illustrating a hot runner 1300 formed on the mold apparatus 1000 according to an embodiment of the present disclosure.

As described above, because the mold apparatus 1000 according to an embodiment of the present disclosure may define the multiple cavities via the rim-shaped cores, the multiple injection-molded products may be manufactured with only the single injection machine (not shown).

In this regard, the injection machine may melt the resin, measure a certain amount, and supply the molten resin to the mold apparatus 1000 of the present disclosure. Such injection machine may include components such as a hydraulic supply for supplying the molten resin, a temperature controller for maintaining a temperature of the molten resin at a certain temperature or higher, and an injection nozzle 130.

In the mold apparatus 1000 of the present disclosure, the fixed mold 1010 may include the sprue bush 1040 into which the molten resin is injected on the surface opposite to the first parting surface P1. In this regard, the sprue bush 1040 may be connected to the injection nozzle 130 of the injection machine. The injection nozzle 130 may be in close contact with the sprue bush 1040 to define a flow channel through which the molten resin is supplied from the injection machine to the mold apparatus 1000 of the present disclosure.

Referring to FIGS. 4 to 7 together, the sprue bush 1040 may be connected to the hot runner 1300 that injects the molten resin into the first cavity C1 and the second cavity C2 via the first injection line 1160 and the second injection line 1170, respectively.

In this regard, the hot runner 1300 may include a first hot runner 1310 that is connected to the sprue bush 1040, extends through the fixed mold 1010 and the first movable mold 1020, and is formed in a first direction (the x-axis direction), a second hot runner 1320 that is branched from the first hot runner 1310 in a second direction (the y-axis direction) perpendicular to the first direction (the x-axis direction), and a third hot runner 1330 that is branched from the second hot runner 1320 in the first direction (the x-axis direction) and is connected to the first injection line 1160 and the second injection line 1170.

In this regard, the third hot runner 1330 may be connected to each of the plurality of first injection lines 1160 formed along the first cavity C1 and the plurality of second injection lines 1170 formed along the second cavity C2, as described above with reference to FIG. 7. That is, the third hot runner 1330 may be branched from the second hot runner 1320 into a plurality of branches in the first direction (the x-axis direction), and accordingly, may play a role in supplying the molten resin to the multiple cavities defined in the mold apparatus 1000 of the present disclosure.

In particular, the mold apparatus 1000 according to an embodiment of the present disclosure has the structure in which the multiple cavities are defined in the same plane by integrating the rim-shaped cores, rather than the stepped structure, as described above with reference to FIG. 6.

Accordingly, distances between one second hot runner 1320 formed at the center of the first movable mold 1020 and the multiple cavities are all equal. Therefore, lengths in the first direction (the x-axis direction) of the branches of the third hot runner 1330 may be equal, and as shown in (b) in FIG. 6, lengths of the first injection line 1160 and the second injection line 1170 may be equal.

Therefore, the mold apparatus 1000 according to an embodiment of the present disclosure may evenly inject the molten resin into the multiple cavities, thereby preventing the imbalance in the injection molding that may occur when the molten resin is injected into the multiple cavities, and improving the quality of the injection-molded product.

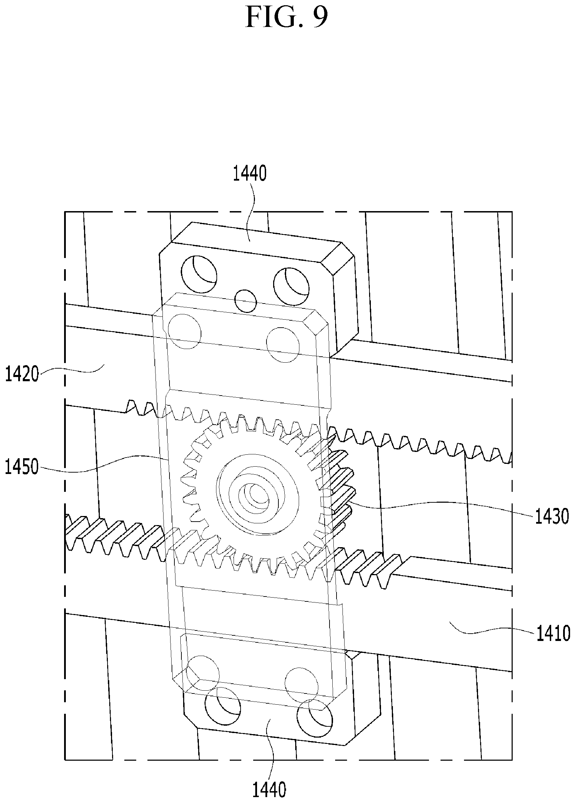

FIG. 9 is an enlarged view of an area A in (a) in FIG. 4.

As described above with reference to FIG. 4, the mold apparatus 1000 according to an embodiment of the present disclosure may further include the driver 1400 that allows the first movable mold 1020 to operate in the front and rear direction (the x-axis direction) in association with the operation of the second movable mold 1030 in the front and rear direction (the x-axis direction). In this regard, the driver 1400 may include the first rack 1410 located on the side surfaces of the fixed mold 1010 and the first movable mold 1020, the second rack 1420 located on the side surfaces of the first movable mold 1020 and the second movable mold 1030, and the pinion 1430 engaged with the first rack 1410 and the second rack 1420.

Via the driver 1400, the mold apparatus 1000 of the present disclosure may equalize the moving speeds in the front and rear direction (the x-axis direction) of the first movable mold 1020 and the second movable mold 1030 during the mold combining and the mold separation, thereby transmitting the equal force such that the separation distances between the fixed mold 1010, the first movable mold 1020, and the second movable mold 1030 remain equal to each other.

Additionally, the driver 1400 may include a guide block 1440 that allows the first rack 1410 and the second rack 1420 to be engaged with the pinion 1430 while maintaining an equal separation distance therebetween. In this regard, the guide block 1440 may be composed of a pair of blocks that are in contact with an upper side of the first rack 1410 and a lower side of the second rack 1420, and may guide the movement of the first rack 1410 and the second rack 1420.

Furthermore, the driver 1400 may include a cover block 1450 that prevents the pinion 1430 engaged with the first rack 1410 and the second rack 1420 from being separated from the mold apparatus 1000. In this regard, the cover block 1450 may be coupled with the above-described guide block 1440 to cover the pinion 1430 to prevent the separation of the pinion 1430.

Therefore, the mold apparatus 1000 according to an embodiment of the present disclosure may improve the lifespan of the mold apparatus 1000 by minimizing the impact that may be applied to the mold apparatus 1000 during the mold combining and the mold separation, via the driver 1400. In addition, the driver 1400 may ensure that the fixed mold 1010, the first movable mold 1020, and the second movable mold 1030 are completely combined with each other as shown in FIG. 3, thereby preventing the imbalance in the injection molding between the multiple cavities during the injection molding process.

The above detailed description is to be construed in all aspects as illustrative and not restrictive. The scope of the present disclosure should be determined by reasonable interpretation of the appended claims and all changes coming within the equivalency range of the present disclosure are intended to be embraced in the scope of the present disclosure.

## Claims

1. A mold apparatus 1000 comprising:
a fixed mold 1010 including a first parting surface P1;
a first movable mold 1020 including a second parting surface P2 facing the first parting surface P1; and
a first core 1100 assembly composed of a fixed core 1110 coupled to the first parting surface P1 of the fixed mold 1010, and a first movable core 1120 coupled to the second parting surface P2 of the first movable mold 1120 and defining a cavity when being in contact with the fixed core 1110,
wherein the first core 1100 assembly includes:
a rim-shaped first core 1130 including a first cavity C1; and
a second core 1140 located inwardly or outwardly of the first core 1130, forming the same plane as the first core 1130, and including a second cavity C2 having a size different from a size of the first cavity C1.

2. The mold apparatus 1000 of claim 1, wherein the first core 1130 and the second core 1140 are detachably coupled to each other in the fixed mold 1010 and the first movable mold 1020.

3. The mold apparatus 1000 of claim 1, wherein the first core 1130 includes a first injection line 1160 extending therethrough at one side thereof and connected to the first cavity C1,
wherein the second core 1140 includes a second injection line 1170 extending therethrough at one side thereof and connected to the second cavity C2.

4. The mold apparatus 1000 of claim 3, wherein the fixed mold 1010 includes a sprue bush 1040 on a surface opposite to the first parting surface P1, wherein molten resin is injected into the sprue bush 1040,
wherein the sprue bush 1040 is connected to a hot runner 1300, wherein the hot runner 1300 injects the molten resin into the first cavity C1 and the second cavity C2 via the first injection line 1160 and the second injection line 1170, respectively.

5. The mold apparatus 1000 of claim 4, wherein the hot runner 1300 includes:
a first hot runner 1310 connected to the sprue bush 1040, extending through the fixed mold 1010 and the first movable mold 1020, and formed in a first direction;
a second hot runner 1320 branched from the first hot runner 1310 in a second direction perpendicular to the first direction; and
a third hot runner 1330 branched from the second hot runner 1320 in the first direction and connected to the first injection line 1160 and the second injection line 1170.

6. The mold apparatus 1000 of claim 3, wherein the first core 1130 includes a first cooling line 1180 formed in a longitudinal direction to be spaced apart from the first cavity C1 located inward,
wherein the second core 1140 includes a second cooling line 1190 formed in the longitudinal direction to be spaced apart from the second cavity C2 located inward.

7. The mold apparatus 1000 of claim 1, wherein the first movable mold 1020 includes a third parting surface P3 at a side opposite to the second parting surfaceP2,
wherein the mold apparatus 1000 further includes:
a second movable mold 1030 including a fourth parting surface P4 facing the third parting surface P3; and
a second core 1200 assembly composed of a second movable core 1210 coupled to the third parting surface P3 of the first movable mold 1020, and a third movable core 1220 coupled to the fourth parting surface P4 of the second movable mold 1030 and defining a cavity when being in contact with the second movable core 1210.

8. The mold apparatus 1000 of claim 7, further comprising a driver 1400 configured to allow the first movable mold 1020 to move in a front and rear direction in association with operation in the front and rear direction of the second movable mold 1030,
wherein the driver 1400 includes:
a first rack 1410 located on a side surface of the fixed mold 1010 and a side surface of the first movable mold 1020;
a second rack 1420 located on the side surface of the first movable mold 1020 and a side surface of the second movable mold 1030; and
a pinion 1430 engaged with the first rack 1410 and the second rack 1420.

9. The mold apparatus 1000 of claim 8, wherein the driver 1400 includes a guide block 1440 allowing the first rack 1410 and the second rack 1420 to be engaged with the pinion 1430 while maintaining an equal separation distance therebetween.

10. The mold apparatus 1000 of claim 7, wherein the second core 1200 assembly includes:
a rim-shaped third core including a third cavity; and
a fourth core located inwardly or outwardly of the third core, forming the same plane as the third core, and including a fourth cavity having a size different from a size of the third cavity.

11. The mold apparatus 1000 of claim 10, wherein the third cavity and the fourth cavity are different in size from the first cavity C1 and the second cavity C2.

12. The mold apparatus 1000 of claim 10, wherein the third core and the fourth core are detachably coupled to each other in the first movable mold 1020 and the second movable mold 1030.
